# EUROPEAN PATENT APPLICATION

(11) **EP 2 511 201 A1**
(43) Date of publication of application: **17.10.2012**
(21) Application number: 12163641.9
(22) Date of filing: 10.04.2012
(51) Int. Cl.: B65G 27/02, B65G 47/14

(54) **Vibrating feeder with circular plan shape**

(30) Priority: 14.04.2011 IT MI20110637
(71) Applicant: Tarabotti, Paolo, 20154 Milano (IT)
(72) Inventor: Tarabotti, Paolo, 20154 Milano (IT)
(74) Representative: Modiano, Micaela Nadia

(57) **Abstract**

A vibrating feeder with circular plan shape, with improved efficiency.

The feeder (1) comprises a footing (2) which supports a tub (4) having a circular plan shape, in which at least one conveyance track (5) is provided, which extends from the bottom (6) of the tub (4) toward the top of the tub (4). Means (8) are provided for the actuation of the tub (4) with a vibrating motion composed of at least one alternating rotation about its axis (9), with respect to the footing (2), for the progressive advancement, along the conveyance track (5), of objects arranged in the tub (4). The feeder (1) also comprises: a pivot (10), which is jointly connected to the tub (4) and is arranged coaxially to the tub (4); at least one paddle (11), which is associated with the pivot (10) and is extended radially with respect to the pivot (10); and means (12) for unidirectional transmission of the rotation of the pivot (10) to the paddle (11) for rotation, in one direction of rotation, of the paddle (11) about the axis (9) with respect to the footing (2) as a consequence of the alternating rotation of the tub (4) about its own axis (9) with respect to the footing (2).

## Description

The present invention relates to a vibrating feeder with circular plan shape, with improved efficiency.

As is known, automated production lines use vibrating feeders which have the function of supplying the production line with a preset quantity of components, optionally also with a preset orientation, if required by the line.

Among the vibrating feeders currently in use, vibrating feeders with circular plan shape are known which are composed substantially of a footing which supports a container or tub or bowl which has a circular plan shape and is arranged generally so that its axis is vertical. The tub is supported by the footing so that it can rotate about its own axis and actuation means act thereon and cause its alternating rotation about its own axis with respect to the footing. Inside the tank a conveyance track is provided, which extends from the bottom of the tub to its top, where it is connected to the line to be fed.

Generally, the conveyance track is extended in a helical shape on the internal lateral surface of the tub and the actuation means act on the tub so as to cause its rotation, with respect to the footing, about its own axis in one direction of rotation, or forward rotation, which matches the advancement of the objects from the bottom toward the top of the tub along the conveyance track, alternated with a rotation in the opposite direction, or return rotation. The return rotation of the tub is performed at a speed which is considerably higher than the rotation rate during the forward rotation, so as to achieve the separation of the objects from the conveyance track. In this manner, the objects placed on the conveyance track, during forward rotation, are substantially integral with the conveyance track, while during the return rotation they separate from the conveyance track, which retracts, and then reengage the conveyance track at a more advanced point of the track when the direction of rotation of the tub is reversed again, thus achieving the progressive advancement of the objects along the conveyance track.

In one type of vibrating feeder with circular plan shape, the tub is supported by the footing by means of leaf springs, which are arranged around the axis of the tub and are inclined with respect to such axis. An electromagnetic actuator is arranged between the footing and the tub and can be actuated to lower the tub toward the footing in contrast with the action of the leaf springs. The activation of the electromagnet causes the very swift lowering of the tub and the loading of the leaf springs, which by being inclined cause the rotation of the tub in one direction of rotation (return rotation). The deactivation of the electromagnet releases the leaf springs, which discharge, causing the rotation of the tube in the opposite direction of rotation (forward rotation).

In many cases, along the conveyance track devices or particular shapes are provided, which achieve a selection and/or orientation of the objects, causing the parts that are not oriented correctly to fall back into the tub and allowing the advancement toward the line to be fed only of the parts that are oriented correctly.

With the use of vibrating feeders with circular plan shape of the known type, there is often the problem of not being able to achieve an adequate feeding of the production line located downstream, with the consequence of a limitation of the productivity of the line.

In some cases the lack of efficiency in supplying the line can be ascribed to the shape or to the material of the objects to be fed, which facilitates clumping of the objects, which, being tied together, are made to fall back into the tub, or to poor friction between the objects and the conveyance track, which prevents their advancement along the conveyance track.

The aim of the present invention is to solve the above mentioned problems, by providing a vibrating feeder with circular plan shape which has a higher efficiency than vibrating feeders with circular plan shape of the known type.

Within this aim, an object of the invention is to provide a vibrating feeder that ensures the correct feeding of objects to a line regardless of the shape and material of the objects to be fed.

Another object of the invention is to provide a vibrating feeder that can be derived, with modifications that are simple to provide, from vibrating feeders of the known type.

Another object of the invention is to provide a vibrating feeder that can be manufactured at competitive costs.

This aim and these and other objects that will become better apparent hereinafter are achieved by a vibrating feeder with circular plan shape, comprising a footing which supports a tub having a circular plan shape, at least one conveyance track being provided in said tub and extending from the bottom of said tub toward the top of said tub, means being provided for the actuation of said tub with a vibrating motion composed of at least one alternating rotation about its axis, with respect to said footing, for the progressive advancement, along said conveyance track, of objects arranged in said tub, **characterized in that** it comprises:
- a pivot, which is jointly connected to said tub and is arranged coaxially to said tub;
- at least one paddle, which is associated with said pivot and is extended radially with respect to said pivot;
- means for unidirectional transmission of the rotation of said pivot to said paddle for rotation, in one direction of rotation, of said paddle about said axis with respect to said footing as a consequence of the alternating rotation of said tub about its own axis with respect to said footing.

Further characteristics and advantages of the invention will become better apparent from the description of a preferred but not exclusive embodiment of the feeder according to the invention, illustrated by way of non-limiting example in the accompanying drawings, wherein:
Figure 1 is a schematic perspective view of the feeder according to the invention;
Figure 2 is a schematic top plan view of the feeder according to the invention;
Figure 3 is a sectional view, taken along the line III-III of Figure 2, of a part of the feeder according to the invention;
Figure 4 is an enlarged-scale sectional view of Figure 3, taken along the line IV-IV;
Figure 5 is a sectional view, similar to Figure 3, of a constructive variation of the feeder according to the invention.

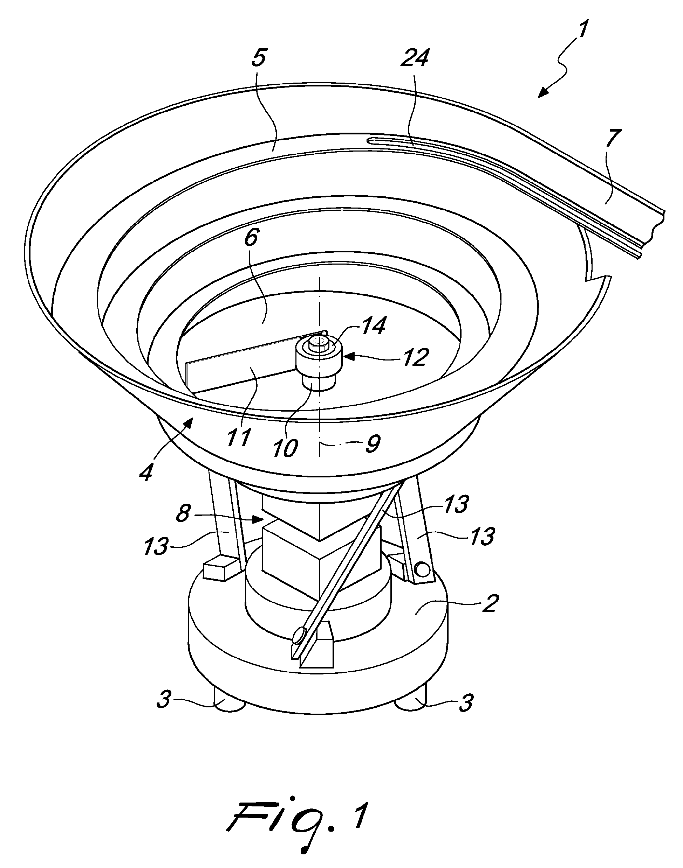

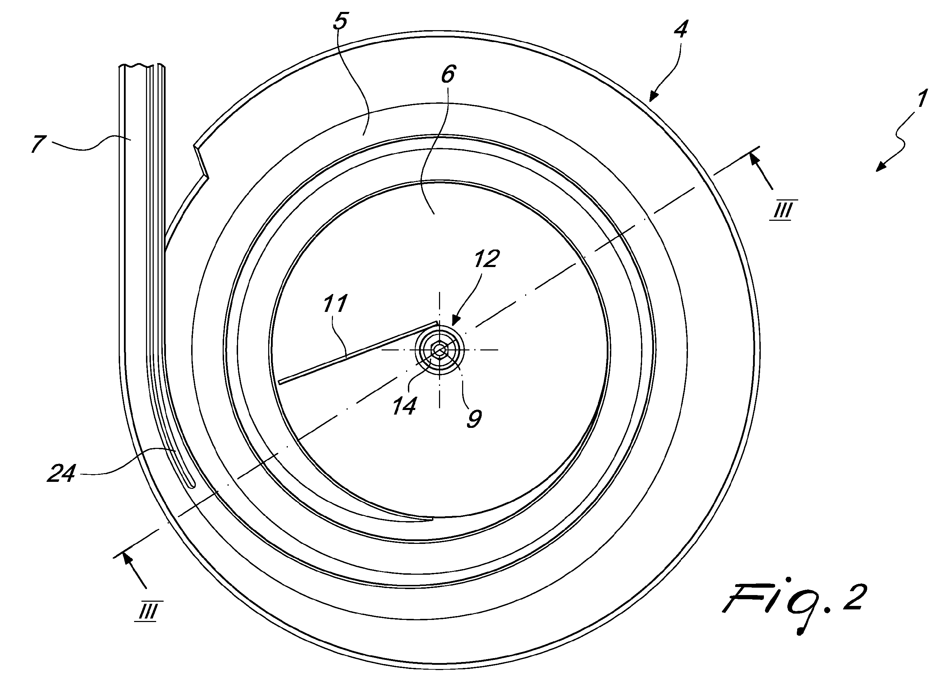

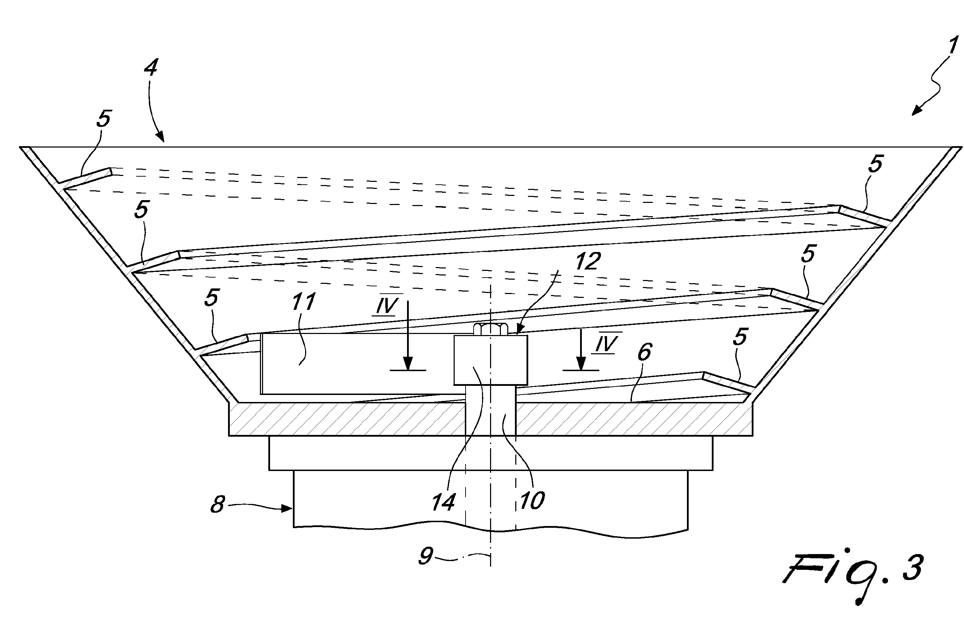

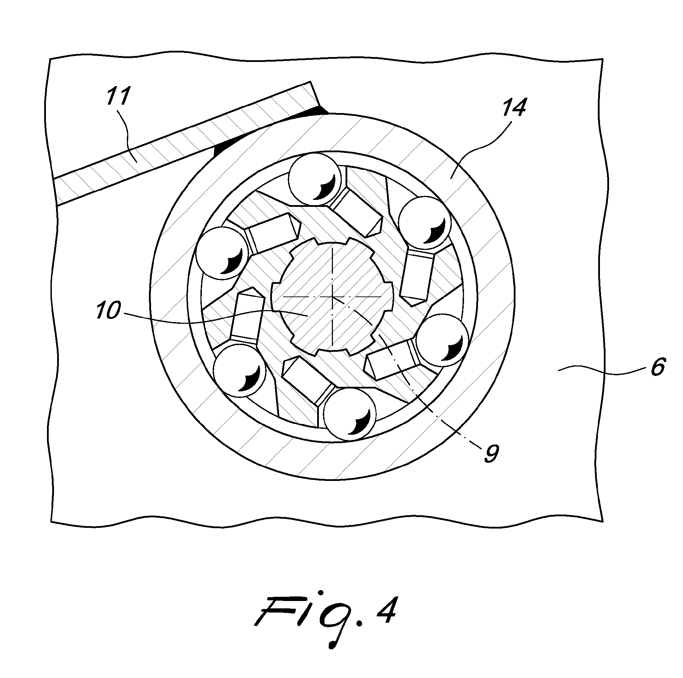

With reference to Figures 1 to 4, the feeder according to the invention, generally designated by the reference numeral 1, comprises, in a per se known manner, a footing 2, which is provided with feet 3 for resting on the ground, and a tub 4 having a circular plan shape, which is supported by the footing 2.

In the tub 4 at least one conveyance track 5 is provided, which extends from the bottom 6 of the tub 4 toward the top of the tub 4, where it is connected to a connecting member 7, by way of which it can be connected to the line that is to be fed by means of objects, not shown, which are arranged in the tub 4.

The feeder 1 according to the invention further comprises means 8 for actuating the tub 4, with respect to the footing 2, with a vibrating motion which is composed of at least one alternated rotation about its own axis 9 so as to cause the progressive advancement, along the conveyance track 5, of the objects arranged in the tub 4.

According to the invention, the feeder 1 comprises: a pivot 10, which is jointly connected to the tub 4 and is arranged coaxially to the tub 4, at least one paddle 11, which is associated with the pivot 10 and is extended radially with respect to the pivot 10, and means 12 for the unidirectional transmission of the rotation of the pivot 10 to the paddle 11 to achieve a rotation, always in a same direction of rotation, of the paddle 11 about the axis 9 with respect to the footing 2 by means of the alternating rotation of the tub 4 about the axis 9 with respect to the footing 2.

Preferably, the pivot 10 is fixed to the bottom 6 of the tub 4.

More precisely, the tub 4 is arranged so that its axis 9 is substantially vertical and can be supported by the footing 2 so as to be able to rotate, with an alternating rotary motion, about the axis 9, for example, as shown, by interposing between the footing 2 and the tub 4 leaf springs 13 which are arranged around the axis 9 and are inclined with respect to the axis 9 so that a lowering of the tub 4 with respect to the footing 2 also causes a rotation of the tub 4 about the axis 9 with respect to the footing 2 and a lifting of the tub 4 with respect to the footing 2 causes a rotation of the tub 4 about the axis 9 with respect to the footing 2 in the opposite direction.

The actuation means 8 can be constituted, in a per se known manner, by an electromagnet which is interposed between the footing 2 and the tub 4 and can be activated to cause the lowering of the tub 4 in contrast with the action of the leaf springs 13, as will become better apparent hereinafter.

Preferably, the unidirectional transmission means 12 comprise a free wheel 14, which is arranged between the pivot 10 and the paddle 11.

The tub 4 has a substantially cylindrical or frustum-like shape, with the larger end face open and directed upward, as shown, and the conveyance track 5 is extended in a helix on the internal side walls of the tub 4 starting from the bottom 6 and rises progressively toward the top of the tub 4.

The alternating rotation of the tub 4 about its axis 9 with respect to the footing 2 comprises, in sequence, a forward rotation in one direction of rotation, which is adapted to move the objects arranged on the conveyance track 5 jointly with the conveyance track 5, and a return rotation, in the opposite direction of rotation, which is adapted to move the conveyance track 5 backwards with respect to the objects arranged thereon.

The unidirectional transmission means 12 are adapted to couple, in rotation about the axis 9, the paddle 11 and the pivot 10 during the forward rotation and to disengage, in rotation about the axis 9, the paddle 11 and the pivot 10 during the return rotation of the tub 4 with respect to the footing 2.

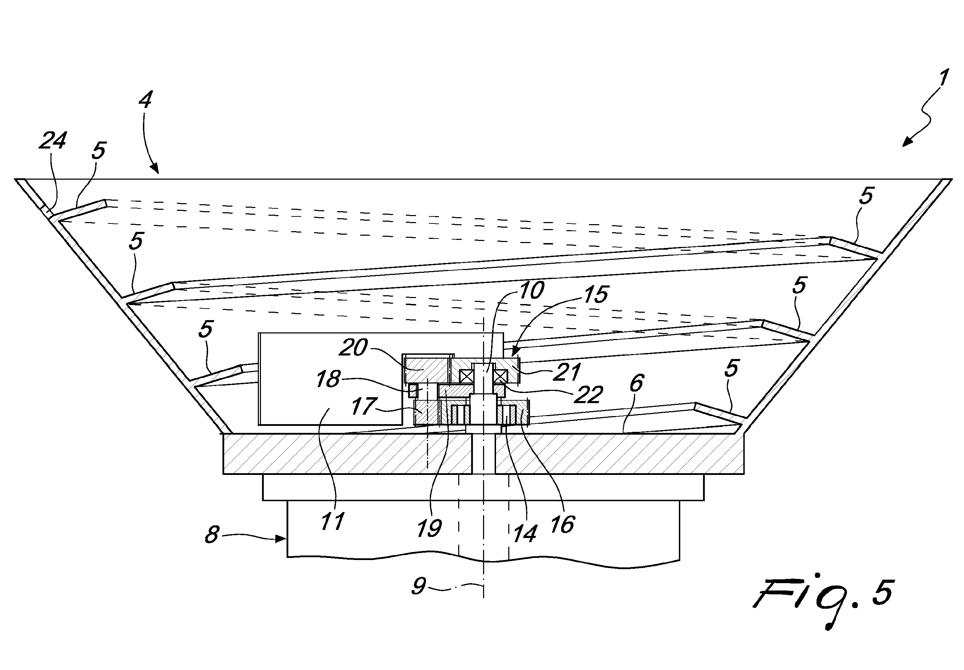

Conveniently, the rotation rate of the paddle 11 can be different from the rotation rate of the pivot 10 during forward rotation, providing, as shown in the variation provided in Figure 5, between the free wheel 14 and the paddle 11, a speed variator 15, which is constituted preferably by a gear-type variator.

Conveniently, the speed variator 15 is constituted by a step-up unit so as to obtain, for the paddle 11, a rotation rate which is higher than the rotation rate of the pivot 10 about the axis 9.

In Figure 5, the elements of the feeder that correspond to the elements that have already been described with reference to Figures 1 to 4 have been designated by the same reference numerals.

More precisely, a free wheel 14 is mounted around the pivot 10 and a first gear 16 is fixed around the free wheel 14 and meshes with a second free wheel 17, which is integral and coaxial with respect to a shaft 18 which, by means of an arm 19, is supported by the pivot 10. A third gear 20 is fixed coaxially to the shaft 8 and meshes with a fourth gear 21 which is coaxial to the pivot 10 and to which the paddle 11 is connected. A bearing 22 is interposed between the fourth gear 21 and the pivot 10.

It is optionally possible to provide one or more paddles 11 arranged around the axis 9.

Moreover, the paddle 11 or paddles 11 can affect only the region of the tub that is not occupied by the conveyance track 5 or can affect the conveyance track 5 as well. In this case, the paddle or paddles 11 can be pivoted to the side of the free wheel 14 about an axis which is perpendicular to the axis 9, so as to be able to follow, for at least one portion, the conveyance track 5, which can have adapted recesses to allow the paddle 11 or the paddles 11 to return toward the lower part of the tub 4.

The upper end of the conveyance track 5 is connected to the connecting member 7, which exits from the tub 4 and can be used to connect the feeder 1 to the line to be supplied. Along the conveyance track 5 or along the connecting member 7 devices or particular shapes can be provided for selecting and/or orienting, in a per se known manner, the objects to be fed.

The embodiment shown illustrates a contoured slot 24 into which the objects, constituted for example by objects composed of a stem with an expanded end which is larger than the contoured slot 24, can fall, remaining in any case suspended from the conveyance track 5 and the connecting member 7 by means of the expanded end, in order to be fed to the line in a preset position.

Operation of the feeder 1 according to the invention is as follows.

The objects to be fed are poured haphazardly into the tub 4.

The vibration of the tub 4, i.e., its alternating rotation about the axis 9, causes the progressive advancement of the objects along the conveyance track 5 toward the connecting member 7 and therefore toward the line to be fed.

More precisely, the actuation of the electromagnet 8 causes the very quick lowering of the tub 4 and the arrangement of the leaf springs 13 converts this lowering motion into a rotary motion (return rotation) of the tub 4 about the axis 9 with respect to the footing 2 with a direction of rotation (counterclockwise in the figures) which is opposite with respect to forward direction (clockwise in the figures) to be imparted to the objects along the conveyance track 5.

During the return rotation, the free wheel 14 disengages the paddle 11 from the pivot 10 in rotation about the axis 9 and therefore this rotation has no effect on the paddle 11.

The deactivation of the electromagnet 8 causes, through the action of the leaf springs 13, a rotation of the tub 4, with respect to the footing 2, which is generally slower than the return rotation, with a rotary motion about the axis 9 in the direction of rotation that matches the advancement direction to be imparted to the objects (forward rotation).

The return rotation, caused by the activation of the electromagnet 8, is so fast that it moves the conveyance track 5, in the opposite direction with respect to the advancement direction of the objects, with respect to the objects, which remain practically stationary during the return rotation and which, when the tub 4 reverses the direction of rotation due to the action of the leaf springs 13, following the deactivation of the electromagnet 8, rest on a more advanced point of the conveyance track 5.

During the forward rotation, the free wheel 14 rigidly couples the paddle 11 to the pivot 10 in rotation about the axis 9 and therefore the paddle 11 rotates jointly with the pivot 10 inside the tub 4, assisting the rise of the objects on the conveyance track 5.

In this manner, the alternating motion of the pivot 10 about its own axis 9 leads to a rotary motion, in a single direction of rotation, of the paddle 11, which assists the advancement of the objects along the conveyance track 5, increasing the efficiency of the feeder.

This higher efficiency makes it possible to utilize fully the productivity of the line being fed and optionally makes it possible to interrupt the supply if it is excessive, making it possible to save power.

In practice it has been found that the feeder according to the invention fully achieves the intended aim, since it has a higher efficiency than conventional types of vibrating feeder. The higher efficiency leads to higher productivity and/or to an energy saving.

The feeder according to the invention is susceptible of numerous modifications and variations, all of which are within the scope of the appended claims. Thus, for example, the actuation means for causing the alternating rotation of the tub 4 about its own axis, instead of being constituted by the electromagnet 8 and by leaf springs 13, as shown, can be constituted by other actuation means of the known type, such as for example piezoelectric actuators or other actuation means.

All the details may further be replaced with other technically equivalent elements.

In practice, the materials used, as well as the dimensions, may be any according to requirements and to the state of the art.

The disclosures in Italian Patent Application No. MI2011A000637 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A vibrating feeder (1) with circular plan shape, comprising a footing (2) which supports a tub (4) having a circular plan shape, at least one conveyance track (5) being provided in said tub (4) and extending from the bottom (6) of said tub (4) toward the top of said tub (4), means (8) being provided for the actuation of said tub (4) with a vibrating motion composed of at least one alternating rotation about its axis (9), with respect to said footing (2), for the progressive advancement, along said conveyance track (5), of objects arranged in said tub (4), **characterized in that** it comprises:
- a pivot (10), which is jointly connected to said tub (4) and is arranged coaxially to said tub (4);
- at least one paddle (11), which is associated with said pivot (10) and is extended radially with respect to said pivot (10);
- means (12) for unidirectional transmission of the rotation of said pivot (10) to said paddle (11) for rotation, in one direction of rotation, of said paddle (11) about said axis (9) with respect to said footing (2) as a consequence of the alternating rotation of said tub (4) about its own axis (9) with respect to said footing (2).

2. The vibrating feeder (1) according to claim 1, **characterized in that** said unidirectional transmission means (12) comprise a free wheel (14), which is arranged between said pivot (10) and said at least one paddle (11).

3. The vibrating feeder (1) according to claims 1 and 2, **characterized in that** said pivot (10) is fixed to the bottom (6) of said tub (4).

4. The vibrating feeder (1) according to one or more of the preceding claims, **characterized in that** said tub (4) has a substantially cylindrical or frustum-like shape and **in that** said conveyance track (5) is extended in a helix on the internal side walls of said tub (4), said alternating rotation comprising a forward rotation in one direction of rotation, which is adapted to move the objects arranged on said conveyance track (5) jointly with said conveyance track (5), and a return rotation, in the opposite direction of rotation, which is adapted to move said conveyance track (5) backwards with respect to the objects arranged thereon.

5. The vibrating feeder (1) according to one or more of the preceding claims, **characterized in that** said unidirectional transmission means (12) are adapted to couple, in rotation about said axis (9), said at least one paddle (11) and said pivot (10) in said forward rotation and to disengage, in rotation about said axis (9), said at least one paddle (11) and said pivot (10) in said return rotation.

6. The vibrating feeder (1) according to one or more of the preceding claims, **characterized in that** said unidirectional transmission means (12) comprise a speed variator (15), which is interposed between said free wheel (14) and said at least one paddle (11).

7. The vibrating feeder (1) according to one or more of the preceding claims, **characterized in that** said speed variator (15) is constituted by a gear-type variator.

8. The vibrating feeder (1) according to one or more of the preceding claims, **characterized in that** said at least one paddle (11) is pivoted to said pivot (10) about an axis which is oriented substantially at right angles to the axis (9) of said pivot (10).
